# EUROPEAN PATENT APPLICATION

(11) **EP 4 495 908 A1**
(43) Date of publication of application: **22.01.2025**
(21) Application number: 23770856.5
(22) Date of filing: 15.03.2023
(51) Int. Cl.: G08G 1/09, G06Q 50/30, G08B 25/04, G08B 31/00

(54) **INFORMATION OUTPUT METHOD, PROGRAM, AND INFORMATION OUTPUT SYSTEM**

(30) Priority: 18.03.2022 JP 2022044630
(71) Applicant: Panasonic Intellectual Property Management Co., Ltd., Kadoma-shi, Osaka 571-0057 (JP)
(72) Inventor: HASHIMOTO, Takashi, Kadoma-shi, Osaka 571-0057 (JP); KUHARA, Shunsuke, Kadoma-shi, Osaka 571-0057 (JP); ARAI, Toshiya, Kadoma-shi, Osaka 571-0057 (JP)
(74) Representative: Novagraaf International SA
(86) International application number: PCT/JP2023/010170
(87) International publication number: WO 2023/176903

(57) **Abstract**

The information output method is an information output method executed by a computer, the information output method including: obtaining first information on at least one of a state of a mobile object or an environment surrounding the mobile object, the mobile object moving through at least one of autonomous movement or a remote operation by an operator; predicting whether an emergency situation that makes the autonomous movement or the remote operation of the mobile object difficult will occur, based on the first information obtained; and outputting a prediction result of whether the emergency situation will occur.

## Description

### [Technical Field]

The present disclosure relates to an information output method, a program, and an information output system for outputting information on a mobile object that moves through autonomous movement and a remote operation by an operator.

### [Background Art]

If a mobile object that moves through autonomous movement or a remote operation by an operator becomes unable to do so for some reason, it is necessary to send security personnel to the site to enable the mobile object to return or be retrieved quickly, or to prevent the mobile object from obstructing traffic.

Patent Literature (PTL) 1 discloses a management system that manages the vehicle state of an automated driving vehicle by having an automated driving assistance center periodically communicate with the automated driving vehicle. In the event that communication between the automated driving assistance center and the automated driving vehicle is interrupted, this management system determines whether to contact an assistant who provides assistance to the automated driving vehicle based on the communication situation.

### [Citation List]

### [Patent Literature]

[PTL 1] International Publication No. 2021/085101

### [Summary of Invention]

### [Technical Problem]

However, as with the technology disclosed in PTL 1, there is a problem that contacting an assistant (security personnel) only after communication between the automated driving assistance center and the automated driving vehicle has been interrupted, that is, after a situation in which the autonomous movement of the mobile object and the remote operation of the operator have become difficult has arisen is too late to take measures to improve the situation.

Therefore, the present disclosure provides an information output method and the like that can quickly improve a situation in which the autonomous movement of a mobile object and the remote operation by an operator become difficult.

### [Solution to Problem]

The information output method according to one aspect of the present disclosure is an information output method executed by a computer, the information output method including: obtaining first information on at least one of a state of a mobile object or an environment surrounding the mobile object, the mobile object moving through at least one of autonomous movement or a remote operation by an operator; predicting whether an emergency situation that makes the autonomous movement or the remote operation of the mobile object difficult will occur, based on the first information obtained; and outputting a prediction result of whether the emergency situation will occur.

It should be noted that these comprehensive or specific aspects may be realized by a system, a method, an integrated circuit, a computer program, or a computer-readable recording medium such as a CD-ROM, or may be realized by any combination of a system, a method, an integrated circuit, a computer program, and a recording medium.

### [Advantageous Effects of Invention]

According to the information output method and the like according to one aspect of the present disclosure, it is possible to quickly improve a situation in which the autonomous movement of a mobile object and the remote operation by an operator become d ifficu lt.

### [Brief Description of Drawings]

[FIG. 1]

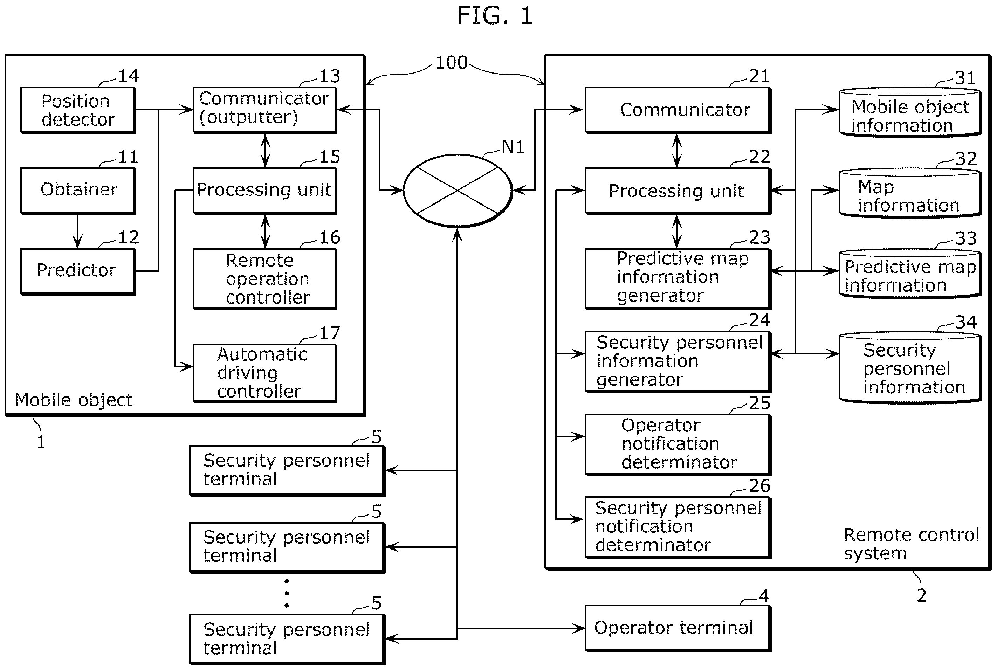

   FIG. 1 is a block diagram illustrating an example of an information output system according to an embodiment.
[FIG. 2]

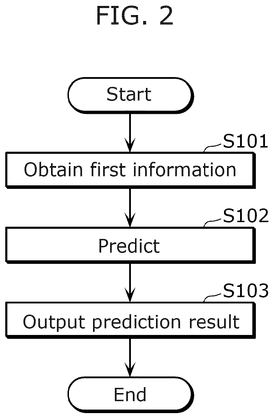

   FIG. 2 is a flowchart illustrating an example of operation of a mobile object according to the embodiment.
[FIG. 3]

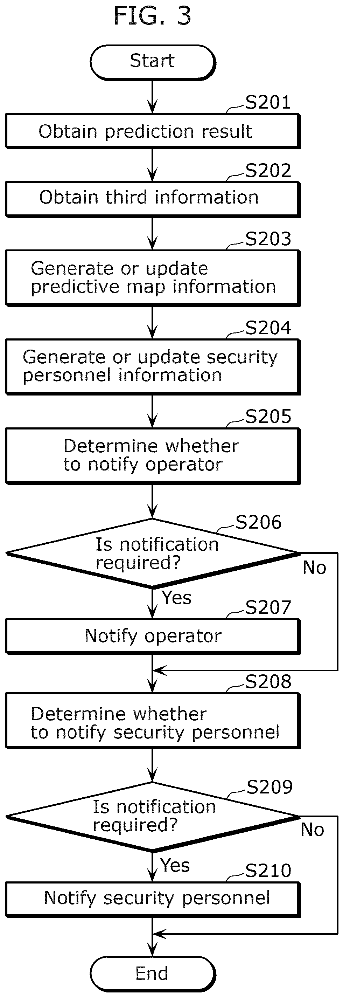

   FIG. 3 is a flowchart illustrating an example of operation of the remote control system according to the embodiment.
[FIG. 4]

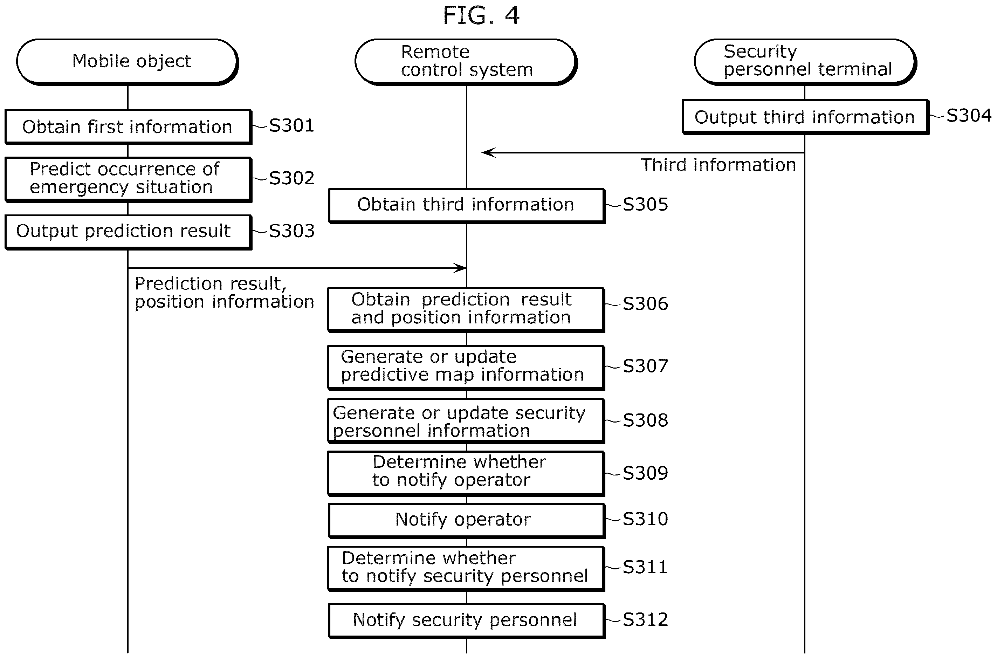

   FIG. 4 is a sequence diagram illustrating an example of operation of the overall configuration including a mobile object, a remote control system, and a security personnel terminal according to the embodiment.
[FIG. 5]

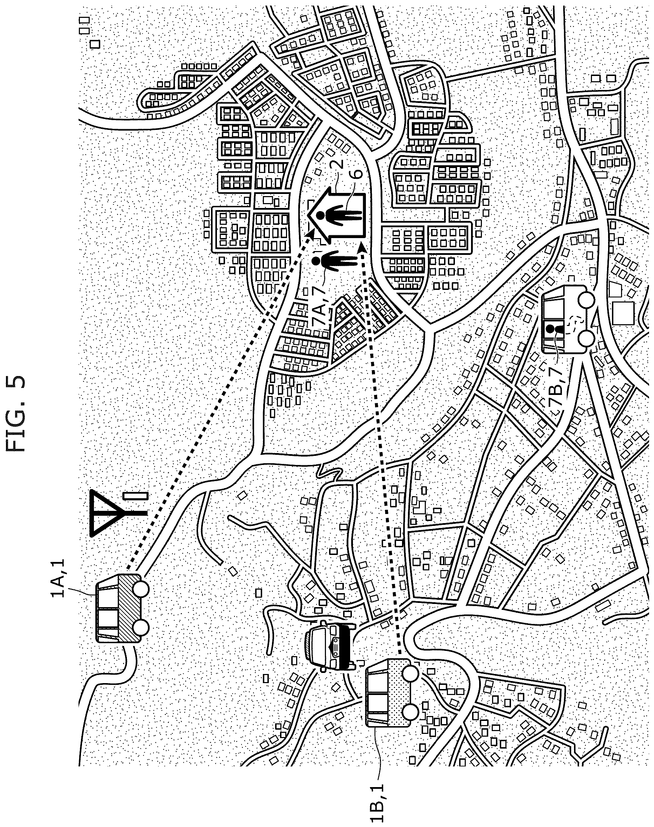

   FIG. 5 is an overview diagram illustrating an example of use of an information output system according to the embodiment.
[FIG. 6]

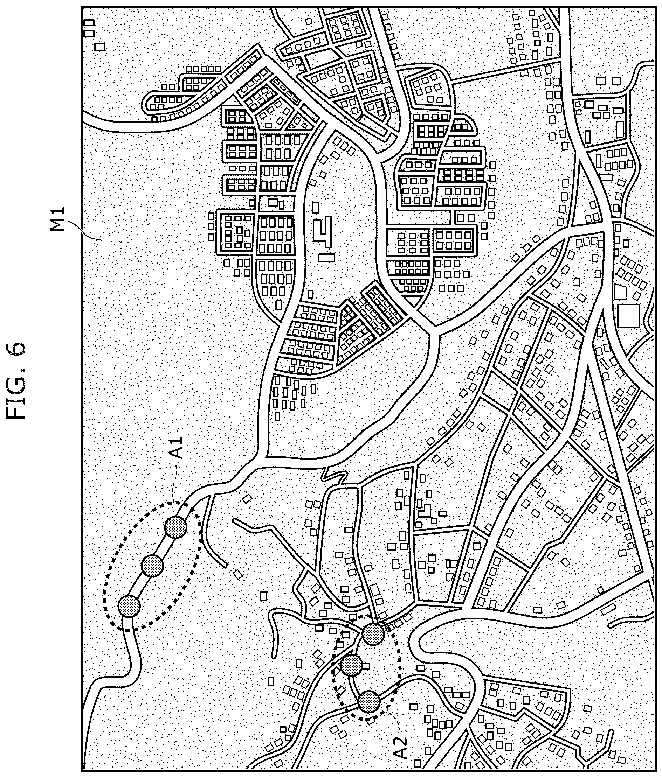

   FIG. 6 is an overview diagram illustrating an example of predictive map information.
[FIG. 7]

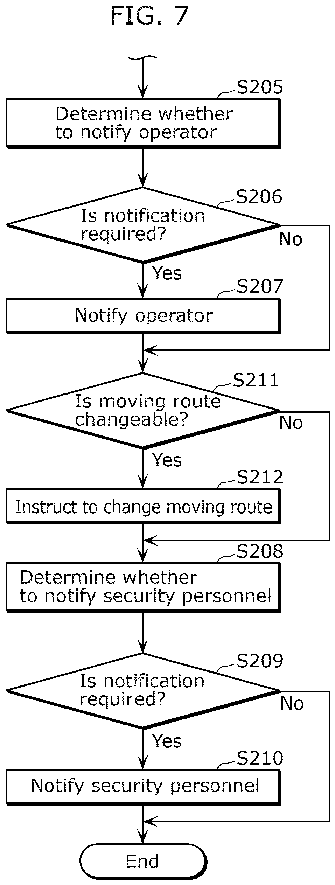

   FIG. 7 is a flowchart illustrating another example of operation of the information output system according to the embodiment.

### [Description of Embodiments]

The information output method according to one aspect of the present disclosure is an information output method executed by a computer, the information output method including: obtaining first information on at least one of a state of a mobile object or an environment surrounding the mobile object, the mobile object moving through at least one of autonomous movement or a remote operation by an operator; predicting whether an emergency situation that makes the autonomous movement or the remote operation of the mobile object difficult will occur, based on the first information obtained; and outputting a prediction result of whether the emergency situation will occur.

According to this, for example, a remote control center can refer to the prediction result and notify an operator or security personnel of an occurrence of an emergency situation before the emergency situation occurs. Therefore, measures can be taken to improve the emergency situation more quickly compared to when an operator or security personnel is notified after the emergency situation occurs. Situations that make it difficult for a mobile object to move autonomously and for an operator to remotely control the mobile object can be improved quickly.

For example, the first information may include information on a communication state of the mobile object, information on a state of a battery mounted on the mobile object, information on a state of a moving route along which the mobile object moves, or information on weather while the mobile object is moving.

This makes it possible to predict the occurrence of various emergency situations.

For example, the emergency situation may include a situation in which communication between the mobile object and a remote control system that remotely monitors the mobile object is interrupted, a situation in which a remaining battery charge of a battery mounted on the mobile object falls below a predetermined value, or a situation in which the mobile object approaches a location where a natural disaster or a man-made disaster has occurred.

This makes it possible to take measures to improve various emergency situations.

For example, the prediction of whether the emergency situation will occur is further based on a load of work of the operator.

This not only makes it possible to take measures to improve emergency situations caused by mobile object 1, but also makes it possible to take measures to improve situations in which it becomes difficult for operator 6 to remotely operate the vehicle.

For example, based on the prediction result of the emergency situation, second information on a dispatch of a security personnel may be output to at least one of the operator and the security personnel who goes to a position of the mobile object and responds to the emergency situation.

This makes it possible to notify an operator or security personnel of an occurrence of an emergency situation before it occurs.

For example, the second information may include information on a location to which the security personnel is to be dispatched, information on a content of the emergency situation, or information on work that should be performed by the security personnel.

This makes it possible for the operator or security personnel to know detailed information about the emergency situation and makes it easier to take measures to improve the emergency situation.

For example, it may be determined whether to output the second information to the operator based on the prediction result of the emergency situation and a history of the prediction result of the emergency situation in a past.

This makes it possible to output the second information to an operator, for example, after determining that there is a high possibility of an emergency situation occurring, and makes it easier to avoid notifying the operator unnecessarily.

For example, a determination may be made as to whether to output the second information to the security personnel based on the prediction result of the emergency situation and a load of work of the operator.

This makes it possible to notify security personnel directly, for example, when a load of work of the operator becomes excessively heavy and the operator is unable to respond.

For example, before dispatching the security personnel, the mobile object may be instructed to change a moving route to avoid the emergency situation.

According to this, the emergency situation is avoided by changing a moving route, so that security personnel need not to be dispatched.

For example, third information on a status of the security personnel may be further obtained, and the security personnel to be dispatched may be determined based on the obtained third information.

This makes it possible to dispatch appropriate security personnel depending on the situation of security personnel.

For example, the third information may include information on a position of the security personnel, or information indicating whether the security personnel is performing work.

This makes it possible to dispatch appropriate security personnel depending on the situation of security personnel.

For example, the security personnel to be dispatched may be determined based further on a distance between an area where the emergency situation is predicted to occur and the security personnel, and the time required for the security personnel to reach the area.

This makes it possible to dispatch appropriate security personnel depending on the situation of security personnel.

For example, predictive map information that reflects the prediction result of the emergency situation in map information including a moving route of the mobile object may be generated, and the generated predictive map information may be output to the operator.

This makes it easier for the operator to make an appropriate determination about whether to dispatch security personnel by referring to predictive map information.

A program according to one embodiment of the present disclosure causes a computer to execute the information output method described above.

According to this, for example, a remote control center can refer to the prediction result and notify an operator or security personnel of an occurrence of an emergency situation before the emergency situation occurs. Therefore, measures can be taken to improve the emergency situation more quickly compared to when an operator or security personnel is notified after the emergency situation occurs. Situations that make it difficult for a mobile object to move autonomously and for an operator to remotely control the mobile object can be improved quickly.

An information output system according to one aspect of the present disclosure includes an obtainer, a predictor, and an outputter. The obtainer obtains first information on at least one of a state of a mobile object or an environment surrounding the mobile object, the mobile object moving through at least one of autonomous movement or a remote operation by an operator. The predictor predicts whether an emergency situation that makes the autonomous movement and the remote operation of the mobile object difficult will occur, based on the first information obtained by the obtainer. The outputter outputs a prediction result of the predictor.

According to this, for example, a remote control center can refer to the prediction result and notify an operator or security personnel of an occurrence of an emergency situation before the emergency situation occurs. Therefore, measures can be taken to improve the emergency situation more quickly compared to when an operator or security personnel is notified after the emergency situation occurs. Situations that make it difficult for a mobile object to move autonomously and for an operator to remotely control the mobile object can be improved quickly.

Hereinafter, embodiments will be specifically described with reference to the drawings.

It should be noted that each of the embodiments described below shows comprehensive or specific examples. The numerical values, shapes, components, arrangement positions and connection forms of the components, steps, order of steps, and the like shown in the following embodiments are examples, and are not intended to limit the present disclosure.

### [Embod iment]

Hereinafter, an information output system and an information output method according to an embodiment will be described.

### [1. Configuration]

FIG. 1 is a block diagram illustrating an example of information output system 100 according to an embodiment. Information output system 100 is a system for outputting information about mobile object 1 that moves autonomously and by remote operation of operator 6 (see FIG. 5).

Mobile object 1 includes an autonomous mobile robot, such as an automatic delivery robot and the like. Mobile object 1 may be any type of autonomous mobile object, and may include vehicles other than robots, such as automobiles or motorcycles. In addition, mobile object 1 is not completely autonomous, and is remotely monitored by operator 6 via remote control system 2, which will be described later. In some cases, mobile object 1 may be moved by remote operation by operator 6 via remote control system 2.

Information output system 100 is an example of a computer that executes an information output method. The components included in information output system 100 may be provided in a single housing, or may be distributed. When the components included in information output system 100 are distributed, the information output method may be executed by a plurality of computers.

As shown in FIG. 1, mobile object 1 includes obtainer 11, predictor 12, communicator (outputter) 13, position detector 14, processing unit 15, remote operation controller 16, and automatic driving controller 17. Obtainer 11, predictor 12, communicator 13, position detector 14, processing unit 15, remote operation controller 16, and automatic driving controller 17 are realized by a processor that executes a program stored in a memory, a communication interface, and the like. The memory is a read only memory (ROM), a random access memory (RAM), and the like, and can store a program executed by the processor. In addition , in the embodiment, obtainer 11, predictor 12, and communicator 13 are included in a part of information output system 100.

Obtainer 11 obtains first information on at least one of the state of mobile object 1 or the environment around mobile object 1. The first information may include, for example, information on the communication state of mobile object 1, information on the state of the battery mounted on mobile object 1, information on the state of the moving route along which mobile object 1 moves, or information on the weather while mobile object 1 is moving.

Information on the communication state of mobile object 1 can be obtained, for example, by measuring the communication state between remote control system 2 and mobile object 1. In addition, information on the state of the battery mounted on mobile object 1 can be obtained, for example, by measuring the battery voltage or the like. In addition, information on the state of the moving route along which mobile object 1 moves can be obtained, for example, from images captured by a camera mounted on mobile object 1, sounds picked up by a microphone, or the detection result of a sensor that detects the surrounding environment, such as a light detection and ranging (LiDAR) mounted on mobile object 1. In addition, this information can also be obtained, for example, from a server that provides road traffic information via network N1 such as the Internet. In addition, information on the weather during the movement of mobile object 1 can be obtained, for example, from a server that provides weather information via network N1.

Predictor 12 predicts whether an emergency situation will occur based on the first information obtained by obtainer 11. Here, an emergency situation is a situation in which autonomous movement and remote operation of mobile object 1 becomes difficult. That is, when an emergency situation occurs, mobile object 1 enters a state in which it becomes difficult or impossible to move autonomously due to some factor. In addition, when an emergency situation occurs, mobile object 1 enters a state in which it becomes difficult or impossible to move even by remote operation by operator 6 via remote control system 2. In the embodiment, predictor 12 predicts whether such an emergency situation will occur before it occurs.

Hereinafter, some specific examples of the emergency situation will be listed.

An emergency situation includes, for example, a situation in which communication between remote control system 2 and mobile object 1 is interrupted. That is, when communication between remote control system 2 and mobile object 1 is interrupted, mobile object 1 cannot be remotely monitored via remote control system 2, which makes it practically in a difficult state for mobile object 1 to move autonomously. In addition, in this case, it becomes in a difficult state for operator 6 to remotely operate mobile object 1 via remote control system 2.

In addition, the emergency situation includes, for example, a situation in which the remaining battery charge of mobile object 1 falls below a predetermined value. That is, when the remaining battery charge of mobile object 1 falls below a predetermined value, mobile object 1 becomes in an inoperable state, so that mobile object 1 cannot move autonomously and cannot be remotely operated by operator 6 via remote control system 2.

In addition, the emergency situation includes, for example, a situation in which an abnormity occurs in a device related to the movement of mobile object 1, or the device breaks down. Such a device is, for example, a motor, an engine, a wheel, a tire, a brake, an accelerator, or the like. For example, in the case of a tire, by determining whether an abnormity has occurred in the tire based on a change in the air pressure of the tire, it is possible to determine whether the movement of mobile object 1 will be impeded.

In addition, the emergency situation includes, for example, a situation in which an abnormity occurs in a camera, a sensor such as LiDAR, or a positioning system such as a global positioning system (GPS) described below, which is mounted on mobile object 1, or any of these fails. For example, when the displacement of the mounting position of the camera exceeds or becomes equal to a threshold value due to vibrations of mobile object 1, or the displacement of the viewing angle of the camera exceeds or becomes equal to a threshold value, this may interfere with the autonomous movement of mobile object 1, and the like, so that it is possible to determine that an abnormity has occurred in the camera. In addition, for example, when the image captured by the camera contains water droplets at a rate greater than a predetermined rate, this may interfere with the autonomous movement of mobile object 1, and the like, so that it is possible to determine that an abnormity has occurred in the camera.

In addition, the emergency situation includes, for example, a situation in which security measures need to take priority over the movement of mobile object 1. Specifically, the emergency situation includes a situation in which mobile object 1 approaches a location where a natural disaster or a man-made disaster has occurred. Such a location includes, for example, a location where emergency vehicles such as police vehicles, ambulances, and fire engines are dispatched, such as the location of an accident or fire. In addition, such a location includes, for example, a location where localized heavy rainfall, localized heavy snowfall, localized dense fog, or localized strong winds occur. In such a location, the site is in chaos and the urgency is relatively high, so even if operator 6 can remotely operate mobile object 1, it is considered easier to respond quickly by dispatching security personnel 7 to the site and responding according to instructions from the site.

In addition, the emergency situation includes, for example, a situation in which mobile object 1 approaches a location that would cause a traffic obstruction if autonomous movement and remote operation of mobile object 1 were no longer possible. Such a location includes, as an example, a location such as urban areas where traffic is likely to be obstructed due to the presence of a large number of people or vehicles. In addition, such a location includes, for example, a construction site where guides direct traffic control on roads, sidewalks, or the like. In addition, such a location includes a location where there is a lot of on-street parking or bicycle parking on sidewalks. In addition, such a location includes narrow roads where it is impossible to pass oncoming vehicles. Also in such a location, even if operator 6 can remotely operate mobile object 1, it is considered easier to respond quickly by dispatching security personnel 7 to the site to respond.

In addition, the emergency situation includes, for example, a situation in which mobile object 1 approaches a location that does not impede traffic, but would be problematic if mobile object 1 could not move autonomously or be remotely controlled. Such a location includes, for example, mountainous areas where falling rocks, collapse of road shoulders, landslides, road cave-ins, or the like may occur. Also in such a location, even if operator 6 can remotely operate mobile object 1, it is considered easier to respond quickly by dispatching security personnel 7 to the site to respond.

In addition, the emergency situation includes, for example, a situation in which remote operation of mobile object 1 by operator 6 is possible, but the number of available operators 6 is low because operators 6 are dealing with other matters or the like, in other words, a situation in which a load of work of operator 6 has increased excessively (more than a predetermined load or work). That is, if the load of work of operator 6 increases excessively, it becomes impossible to remotely monitor mobile object 1 via remote control system 2, and it becomes practically in a difficult state for mobile object 1 to move autonomously. In addition, in this case, it becomes in a difficult state for operator 6 to remotely operate mobile object 1 via remote control system 2.

In addition, the emergency situation includes, for example, a situation in which an abnormity occurs in the delivery item being delivered by mobile object 1, which interferes with the autonomous movement of mobile object 1 and the remote operation by the operator. An abnormity in the delivery item may occur, for example, when the delivery item is fragile, due to vibration being applied to the delivery item. In addition, an abnormity in the delivery item may occur, for example, when the delivery item requires refrigerated or frozen storage, due to the temperature of the storeroom (refrigerator or freezer) exceeding the normal temperature.

Hereinafter, a specific example of the prediction of the occurrence of an emergency situation by predictor 12 will be described.

For example, when the emergency situation is a situation in which communication between remote control system 2 and mobile object 1 is interrupted, predictor 12 predicts whether an emergency situation will occur based on the communication situation between remote control system 2 and mobile object 1. For example, predictor 12 predicts that an emergency situation will occur when the round-trip time (RTT) value exceeds an allowable value (e.g., several seconds) or when the behavior of the RTT value differs from normal behavior. In addition, for example, predictor 12 predicts that an emergency situation will occur when the packet loss rate exceeds an allowable value or when the behavior of the packet loss differs from normal behavior. In addition, for example, predictor 12 predicts that an emergency situation will occur when data transmitted from either remote control system 2 or mobile object 1 to the other is not transmitted within an allowable time, that is, when a timeout occurs.

In addition, for example, when the emergency situation is a situation in which the remaining battery charge of mobile object 1 falls below a predetermined value, predictor 12 predicts whether an emergency situation will occur based on the remaining battery charge, the amount of battery consumption based on the distance or time from mobile object 1 to the charging station, and parameters that lead to accidental battery consumption. The parameters include, for example, a history of the number of remote operations by operator 6. In addition, the parameters include the frequency of stopping or detouring mobile object 1 based on the detection of an obstacle by a sensor mounted on mobile object 1. In addition, the parameters include the frequency of deceleration or stopping of mobile object 1 based on the situation of the moving route.

It should be noted that the amount of battery consumption may be calculated by further taking into consideration the traffic congestion situations in the road traffic information. That is, predictor 12 may predict that an emergency situation will occur when it determines that the battery will run out of power before mobile object 1 reaches a charging station due to mobile object 1 being caught in traffic congestion.

Here, if mobile object 1 is intermittently running and stopping due to being caught in traffic congestion, predictor 12 may frequently predict the occurrence of an emergency situation. Therefore, predictor 12 may predict the occurrence of an emergency situation when mobile object 1 remains stopped for a predetermined period of time or more and the remaining battery charge falls below a threshold value. In this case, it becomes easier to avoid frequent predictions of the occurrence of an emergency situation, as mentioned above. In addition, in this case, the parameter includes the stopping of mobile object 1 based on detection of the stoppage during movement by a sensor mounted on mobile object 1, the time from stopping to starting to run again, or the frequency of stopping.

In addition, for example, when the emergency situation is a situation in which mobile object 1 approaches a location where a natural disaster or a man-made disaster has occurred, predictor 12 predicts whether an emergency situation will occur based on road traffic information or weather information. It should be noted that predictor 12 may predict whether an emergency situation will occur based on, instead of or in addition to the road traffic information, for example, an image captured by a camera mounted on mobile object 1, a sound picked up by a microphone, or a detection result of a sensor that detects the surrounding environment, such as a LiDAR mounted on mobile object 1.

Communicator (outputter) 13 is a wireless communication interface for communicating with remote control system 2 via network N1. Communicator 13 transmits to remote control system 2 position information indicating the position of mobile object 1 detected by position detector 14, information on the state of mobile object 1 such as information on the battery state, and the prediction result predicted by predictor 12. In addition, communicator 13 receives, for example, an instruction signal indicating an instruction for remote control of mobile object 1 transmitted from remote control system 2.

Communicator (outputter) 13 outputs the prediction result of predictor 12. That is, communicator 13 transmits the prediction result of predictor 12 to remote control system 2, regardless of whether predictor 12 has predicted the occurrence of an emergency situation.

Position detector 14 detects the position of mobile object 1. Position detector 14 detects the position of mobile object 1 based on a positioning result of a positioning system such as a global positioning system (GPS) and the like.

Processing unit 15 is the main controller of mobile object 1. Processing unit 15 manages and controls entire mobile object 1 by coordinating with each of obtainer 11, predictor 12, communicator (outputter) 13, position detector 14, remote operation controller 16, and automatic driving controller 17.

When communicator 13 receives an instruction signal described later via network N1, remote operation controller 16 controls mobile object 1 according to the contents of the instruction signal. Accordingly, mobile object 1 is remotely operated according to the instruction of operator 6.

Automatic driving controller 17 moves mobile object 1 autonomously by controlling mobile object 1 according to contents instructed to mobile object 1 from remote control system 2 via network N1. The instruction here is different from the instruction of operator 6 mentioned above. For example, when mobile object 1 is an automatic delivery robot, automatic driving controller 17 moves mobile object 1 autonomously according to instructions to move towards one or more delivery destinations.

Remote control system 2 operates in a remote control center where a plurality of operators 6 are stationed, or in a server device, and is a system in which each operator 6 remotely monitors and, in some cases, remotely operates a plurality of mobile objects 1. Each operator 6 uses operator terminal 4 which is an information terminal such as a personal computer and the like to monitor the situation of each mobile object 1 displayed on a display attached to operator terminal 4. In addition, each operator 6 remotely operates mobile object 1, for example, when a request for remote operation is received from mobile object 1, or when operator 6 determines that mobile object 1 is in a state where it should be remotely operated. It should be noted that operator terminal 4 may be connected to remote control system 2 without going through network N1.

As shown in FIG. 1, remote control system 2 includes communicator 21, processing unit 22, predictive map information generator 23, security personnel information generator 24, operator notification determiner 25, and security personnel notification determiner 26. In addition, remote control system 2 further includes first storage 31, second storage 32, third storage 33, and fourth storage 34. It should be noted that first storage 31, second storage 32, third storage 33, and fourth storage 34 may not be included as components of remote control system 2, and for example, they may be included in a server device separate from remote control system 2.

In the embodiment, predictive map information generator 23, security personnel information generator 24, operator notification determiner 25, and security personnel notification determiner 26 are included in part of information output system 100. That is, in the embodiment, information output system 100 is realized by mobile object 1 and remote control system 2 cooperating with each other.

Remote control system 2 is a computer including a processor, a communication interface, a memory, and the like. The memory is ROM, RAM, and the like, and can store programs executed by the processor. Communicator 21, processing unit 22, predictive map information generator 23, security personnel information generator 24, operator notification determiner 25, and security personnel notification determiner 26 are realized by a processor that executes programs stored in the memory, the communication interface, and the like.

Communicator 21 is a wireless communication interface for communicating with each mobile object 1 via network N1. Communicator 21 receives, for each mobile object 1, position information transmitted from mobile object 1, information on the state of mobile object 1 such as information on the battery state, and the prediction result of predictor 12. In addition, communicator 21 transmits an instruction signal generated in response to the operation of operator terminal 4 of operator 6 to mobile object 1 to be remotely controlled.

In addition, communicator 21 communicates with security personnel terminal 5 used by security personnel 7 (see FIG. 5) via network N1. Security personnel terminal 5 is, for example, an information terminal such as a smartphone, a tablet terminal, a personal computer, or the like. In the embodiment, since there are a plurality of security personnel 7, communicator 21 communicates with each of the plurality of security personnel terminals 5.

Here, security personnel 7 are personnel who, in the event of an emergency situation, go to the position of mobile object 1 and respond to the emergency situation. Specifically, security personnel 7 go to the position of mobile object 1 and attempt to resolve the emergency situation by manually driving mobile object 1 to an appropriate location, by resolving any abnormities occurring in mobile object 1 to restore mobile object 1, or by recovering mobile object 1. In the embodiment, security personnel 7 will go to the position of mobile object 1 not only when an emergency situation has occurred, but also when it is predicted that an emergency situation will occur and it is determined that the dispatch of security personnel 7 is necessary.

In the embodiment, communicator 21 obtains third information on the situation of security personnel 7 by communicating with security personnel terminal 5 via network N1. The third information includes information on the position of security personnel 7, or information indicating whether security personnel 7 is performing work. In the embodiment, the third information includes both of these two pieces of information. Here, the information indicating whether security personnel 7 is performing work is specifically information indicating one of the following three situations. The first situation is a situation in which security personnel 7 is on the way to the site (i.e., the position of target mobile object 1) or security personnel 7 is responding at the site. The second situation is a situation in which security personnel 7 is patrolling. The third situation is a situation in which security personnel 7 is waiting at a waiting location such as a home or office.

Processing unit 22 is the main controller of remote control system 2. Processing unit 22 manages and controls entire remote control system 2 by cooperating with each of communicator 21, predictive map information generator 23, security personnel information generator 24, operator notification determiner 25, and security personnel notification determiner 26.

Predictive map information generator 23 generates predictive map information indicating an area where an emergency situation may occur, for each mobile object 1 or for each area where information output system 100 performs remote control of a plurality of moving objects 1, based on the time information at which predictor 12 of mobile object 1 predicts that an emergency situation will occur, the position information of mobile object 1 on the map information, and the emergency situation predicted to occur. In other words, predictive map information generator 23 generates predictive map information for each mobile object 1 or for each area where information output system 100 performs remote control of a plurality of mobile objects 1, in which the prediction result of the emergency situation is reflected in map information including the moving route of mobile object 1. In addition, predictive map information generator 23 updates the predictive map information by generating predictive map information each time it obtains a prediction result of an emergency situation. The predictive map information includes a history of areas where an emergency situation has been predicted to occur in the past by predictor 12 of mobile object 1.

The predictive map information generated by predictive map information generator 23 is, for example, referred to in the processing executed by operator notification determiner 25, as described below. In addition, the predictive map information is output to the operator by being displayed on a display attached to operator terminal 4, for example, when operator notification determiner 25 cannot determine whether to notify operator 6 of the second information, as described below. By looking at the predictive map information displayed on the display, operator 6 can grasp the position of mobile object 1 where an emergency situation is predicted to occur. Then, by referring to the predictive map information, operator 6 can determine whether to dispatch security personnel 7.

Security personnel information generator 24 generates security personnel information for each security personnel 7 based on the third information obtained from security personnel terminal 5. The security personnel information basically includes the contents included in the third information, that is, the position of security personnel 7 and information indicating whether security personnel 7 is currently performing work. In addition, security personnel information generator 24 updates the security personnel information by generating security personnel information each time it obtains the third information.

Operator notification determiner 25 determines whether to notify operator 6 of the second information on the dispatch of security personnel 7 based on the prediction result of predictor 12 of mobile object 1 or based on both the prediction result and the predictive map information when the predictive map information includes a history of areas where an emergency situation has been predicted to occur in the past. That is, information output system 100 does not notify operator 6 simply because predictor 12 of mobile object 1 has predicted that an emergency situation will occur, but rather notifies operator 6 after determining the certainty of the prediction. Operator notification determiner 25 may notify all operators 6 by notifying all operator terminals 4, for example, or may notify only operator 6 in charge of target mobile object 1.

It should be noted that in addition to the second information, operator notification determiner 25 may further notify operator 6 of information indicating the certainty of the prediction. Here, the certainty of the prediction is indicated, for example, by the ratio of the number of times the same prediction was made at the same location multiple times in the past, and the number of times the emergency situation actually occurred out of the multiple predictions. As an example, if a prediction is made 10 times and the actual number of times the emergency situation occurs is 7 times, the certainty of the prediction is indicated by 70%. In this case, if the certainty of the prediction is relatively high, such as 70%, operator 6 can easily take measures such as preparing to dispatch security personnel 7 as soon as possible.

It should be noted that when notifying operator 6 of the information indicating the certainty of the prediction, the display mode on the display attached to operator terminal 4 may be changed according to the degree of certainty of the prediction. For example, the color of the character string and the like indicating the certainty of the prediction or the font size may be changed according to the degree of certainty of the prediction.

The second information may include information on the location to which security personnel 7 is dispatched (e.g., the position of mobile object 1, and the like), information on the contents of the emergency situation, or information on the work to be performed by security personnel 7. The information on the location described above includes, for example, the position of mobile object 1, the position of the area where the emergency situation is predicted to occur or the like. In addition, if operator 6 moves mobile object 1 to a predetermined location by remote operation and then stops mobile object 1, the information on the location described above includes the position of the predetermined location. In addition, operator notification determiner 25 may notify operator 6 of the time it will take for mobile object 1 described above to reach the area of the position where the emergency situation described above is predicted to occur. In addition, security personnel notification determiner 26 may notify security personnel 7 of information on the position of mobile object 1, the position of the area where the emergency situation described above is predicted to occur, or the like. The information on the contents described above includes, for example, information indicating that there is a possibility that communication between remote control system 2 and mobile object 1 will be interrupted, and the like. In addition, the information on the work described above includes, for example, information indicating that mobile object 1 will be manually driven to move to a predetermined location, and the like. It should be noted that the second information may simply be information indicating that security personnel 7 should be dispatched.

Hereinafter, a specific example of the determination by operator notification determiner 25 will be described. First, predictive map information generator 23 updates the predictive map information by reflecting the identifier of that mobile object 1, the position of mobile object 1 at the time of obtaining the prediction result, and the time in the predictive map information each time predictive map information generator 23 obtains the prediction result of predictor 12 of mobile object 1. Accordingly, the predictive map information reflects the history of prediction results of past emergency situations. Then, operator notification determiner 25 refers to the predictive map information, and when the prediction result that an emergency situation will occur is still obtained at a time when mobile object 1 approaches the area where the emergency situation is predicted to occur, operator notification determiner 25 notifies operator 6. On the other hand, when the prediction that an emergency situation will occur has been resolved at that time, operator notification determiner 25 does not notify operator 6, and invalidates the prediction that an emergency situation will occur in the predictive map information. It should be noted that operator notification determiner 25 may notify operator 6 if the difference between the time when the predictive map information is updated and the time when the prediction that an emergency situation will occur is resolved is shorter than a predetermined time. In this way, operator notification determiner 25 may determine whether to output second information to operator 6 based on the prediction result of the emergency situation and the predictive map information (the history of the prediction results of the emergency situation in the past).

Here, when notifying operator 6, operator notification determiner 25 may set the importance level of the notification to operator 6 based on predictive map information (the history of areas where emergency situations have been predicted to occur in the past). For example, operator notification determiner 25 sets the importance level high in areas where emergency situations have been predicted to occur in the past, depending on the predicted frequency. In addition, for example, operator notification determiner 25 sets the importance level high when security personnel 7 have actually been dispatched to that area. It should be noted that, for example, when the importance level is reflected in the predictive map information, operator notification determiner 25 may set the importance level of the notification to the operator by reading out the importance level included in the predictive map information.

In addition, when notifying operator 6, operator notification determiner 25 may set the importance level according to, for example, the area in which an emergency situation is predicted to occur, the distance between that area and mobile object 1, and the time required for mobile object 1 to reach that area. For example, the shorter the distance described above and the time described above, the higher the importance level is set by operator notification determiner 25.

Operator notification determiner 25 notifies operator 6 in descending order of importance level. It should be noted that operator notification determiner 25 notifies operator 6 only when the importance level exceeds a threshold value, and does not have to notify operator 6 when the importance level is below the threshold value.

When operator 6 receives the notification, operator 6 determines whether it is necessary to dispatch security personnel 7 based on the content of the notification. If it is determined that security personnel 7 need to be dispatched, operator 6 determines which security personnel 7 to dispatch, for example, based on the importance level of the notification, and notifies the determined security personnel 7. On the other hand, if operator 6 determines that it is not necessary to dispatch security personnel 7, operator 6 invalidates the registration described above, for example.

Security personnel notification determiner 26 determines whether to notify security personnel 7 of the second information on the dispatch of security personnel 7 based on at least one of the prediction result of predictor 12 of mobile object 1, the predictive map information, or the security personnel information (third information). Security personnel notification determiner 26 may notify all of security personnel 7 by notifying all of security personnel terminals 5, for example, or may notify only target security personnel 7.

Basically, security personnel notification determiner 26 notifies security personnel 7 when operator notification determiner 25 notifies operator 6. That is, in the embodiment, information output system 100 notifies both operator 6 and security personnel 7 when notifying operator 6.

Here, security personnel notification determiner 26 may determine whether to notify security personnel 7 as follows. For example, security personnel notification determiner 26 calculates the number of mobile objects 1 for which an emergency situation is predicted to occur, based on the prediction result of predictor 12 for a plurality of mobile objects 1. Then, if the number of operators 6 available to respond is less than the calculated number of mobile objects 1, security personnel notification determiner 26 notifies security personnel 7. In this case, since there will be moving objects 1 that operators 6 cannot remotely operate, security personnel 7 who receive the notification will act on behalf of operators 6 to improve the situation in which the autonomous movement of mobile objects 1 and the remote operation of operators 6 are difficult, and the like.

In addition, for example, predictive map information generator 23 may reflect the location where the remote operation request from mobile object 1 was made and the time when the remote operation of mobile object 1 was performed in the predictive map information as a history. In this case, security personnel notification determiner 26 may notify security personnel 7 when the number of available operators 6 is less than a predetermined number in a situation where mobile object 1 is moving in an area where the frequency of remote operation requests is relatively high and an area where remote operation is performed for a relatively long time by referring to the predictive map information. That is, when the number of available operators 6 is insufficient in an area where remote operation requests are relatively high, it is easier to respond quickly by notifying security personnel 7 and having security personnel 7 respond, rather than waiting for operators 6 to be able to respond. In addition, since an area where remote operation is performed for a relatively long time is considered to be a location where it is difficult for operator 6 to perform remote operation, it is easier to respond quickly by notifying security personnel 7 and having security personnel 7 respond, rather than waiting for operators 6 to be able to respond. It should be noted that information on the request for remote operation may not be reflected in the predictive map information, but may be stored in, for example, a storage included in remote control system 2. In this case, security personnel notification determiner 26 may perform the same operation as described above by reading out and referring to the information on the request for remote operation from that storage.

In addition, for example, security personnel notification determiner 26 may notify security personnel 7 when there are a sufficient number of available operators 6 but a small number of operators 6 with high proficiency. The proficiency of operator 6 increases, for example, the longer the cumulative time spent performing remote operation. In this way, security personnel notification determiner 26 may determine whether to output second information to security personnel 7 based on the prediction result of the emergency situation and the load of work of operator 6. Information on the proficiency of operator 6 may be stored, for example, in a storage included in remote control system 2.

In addition, when notifying security personnel 7, security personnel notification determiner 26 may determine security personnel 7 to be dispatched based on the security personnel information (third information). For example, security personnel notification determiner 26 may determine security personnel 7 to be dispatched based on the distance between the area where an emergency situation is predicted to occur and security personnel 7, and the time required for security personnel 7 to reach that area.

In addition, when notifying security personnel 7, security personnel notification determiner 26 may determine security personnel 7 to be dispatched depending on the state of security personnel 7 by referring to the security personnel information (third information). For example, security personnel notification determiner 26 determines that security personnel 7 to be dispatched with priority will be security personnel 7 who are on standby.

In addition, security personnel notification determiner 26 may determine security personnel 7 to be dispatched based on the proficiency of security personnel 7. The proficiency of security personnel 7 increases, for example, the greater the cumulative number of locations to which security personnel 7 has been dispatched or the cumulative number of times security personnel 7 has been dispatched. In addition, the proficiency of security personnel 7 increases, for example, the longer the cumulative response time at the dispatch destination. For example, when the work of resolving an emergency situation is difficult, security personnel notification determiner 26 determines security personnel 7 with high proficiency to be dispatched. Information on the proficiency of security personnel 7 may be stored in fourth storage 34 as part of the security personnel information (third information), or may be stored in a separate storage.

Upon receiving the notification, security personnel 7 determines whether it is necessary to go to the site based on the content of the notification. If security personnel 7 determines that it is necessary to go to the site, security personnel 7 notifies operator 6 that security personnel 7 will go to the site and goes to the site. On the other hand, if security personnel 7 determines that it is not necessary to go to the site, security personnel 7 notifies operator 6 of that effect.

As mentioned above, in the embodiment, information output system 100 (here, operator notification determiner 25 and security personnel notification determiner 26) notifies at least one of operator 6 or security personnel 7 (here, both) based on the prediction result of the emergency situation (i.e., outputs second information on the dispatch of security personnel 7).

First storage 31 stores mobile object information on mobile objects 1 for each mobile object 1 or for each area in which information output system 100 performs remote control of a plurality of mobile objects 1. The mobile object information includes, for example, position information indicating the position of mobile object 1, an identifier of mobile object 1, and the like. The mobile object information is updated each time position information is obtained from mobile object 1.

Second storage 32 stores map information including the moving route along which mobile object 1 moves for each mobile object 1 or for each area in which information output system 100 remotely controls a plurality of mobile objects 1. The map information is updated each time the moving route along which mobile object 1 moves is changed.

Third storage 33 stores the predictive map information generated by predictive map information generator 23 for each mobile object 1 or for each area in which information output system 100 remotely controls a plurality of mobile objects 1. The predictive map information is updated each time predictive map information is generated by predictive map information generator 23.

Fourth storage 34 stores security personnel information on security personnel 7 for each security personnel 7. The security personnel information is updated each time security personnel information is generated by security personnel information generator 24.

### [2. Operation]

Hereinafter, the operation of the overall configuration including information output system 100 according to the embodiment will be described.

First, an example of the operation of mobile object 1 will be described with reference to FIG. 2. FIG. 2 is a flow chart illustrating an example of the operation of mobile object 1 according to the embodiment.

First, obtainer 11 periodically obtains the first information (S101). Next, predictor 12 predicts whether an emergency situation will occur based on the first information obtained by obtainer 11 (S102). Then, communicator (outputter) 13 transmits (outputs) the prediction result of predictor 12 to remote control system 2 via network N1 (S103). Hereinafter, step S101 to step S103 described above are repeated while mobile object 1 is in operation.

Next, an example of the operation of remote control system 2 will be described with reference to FIG. 3. FIG. 3 is a flowchart illustrating an example of the operation of remote control system 2 according to the embodiment.

First, communicator 21 obtains the prediction result of predictor 12 transmitted from mobile object 1 (S201). In addition, communicator 21 obtains the third information transmitted from security personnel terminal 5 (S202). It should be noted that steps S201 and S202 do not have to be in this order, and may be in the reverse order. Next, predictive map information generator 23 generates or updates predictive map information by reflecting the prediction result obtained by communicator 21 in the map information (S203). In addition, security personnel information generator 24 generates or updates security personnel information based on the third information obtained by communicator 21 (S204). It should be noted that steps S203 and S204 do not have to be in this order, and may be in the reverse order.

Next, operator notification determiner 25 determines whether to notify operator 6 of the second information based on the prediction result or based on both the prediction result and the predictive map information when the predictive map information includes the history of areas where an emergency situation has been predicted to occur in the past (S205). If it is determined that notification is necessary (S206: Yes), operator notification determiner 25 notifies operator 6 (S207). On the other hand, if it is determined that notification is not necessary (S206: No), operator notification determiner 25 does not execute anything in particular.

Next, security personnel notification determiner 26 determines whether to notify the second information to security personnel 7 based on at least one of the prediction result, the predictive map information, or the security personnel information (third information) (S208). If it is determined that notification is necessary (S209: Yes), security personnel notification determiner 26 notifies the security personnel 7 (S210). On the other hand, if it is determined that notification is not necessary (S209: No), security personnel notification determiner 26 does not execute anything in particular. Hereinafter, steps S201 to S210 described above are repeated during the operation of remote control system 2.

Next, an example of the operation of the overall configuration including mobile object 1, remote control system 2, and security personnel terminal 5 will be described with reference to FIG. 4. FIG. 4 is a sequence diagram illustrating an example of the operation of the overall configuration including mobile object 1, remote control system 2, and security personnel terminal 5 according to the embodiment. It should be noted that in the example illustrated in FIG. 4, the process of determining whether to notify operator 6 will be described as determining that notification to operator 6 is necessary. In addition, in the example illustrated in FIG. 4, the process of determining whether to notify security personnel 7 will be described as determining that notification to security personnel 7 is necessary.

First, in mobile object 1, obtainer 11 periodically obtains the first information (S301). Then, predictor 12 predicts whether an emergency situation will occur based on the first information obtained by obtainer 11 (S302). Then, communicator (outputter) 13 transmits (outputs) the prediction result to remote control system 2 (S303). Here, communicator 13 also transmits position information indicating the position of mobile object 1 detected by position detector 14 together with the prediction result. It should be noted that the position information is periodically transmitted to remote control system 2 regardless of whether the prediction result is transmitted.

In addition, security personnel terminal 5 transmits (outputs) the third information to remote control system 2 in response to a specified operation by security personnel 7, or periodically and automatically (S304).

In remote control system 2, communicator 21 obtains the third information transmitted from security personnel terminal 5 (S305). In addition, communicator 21 obtains the prediction result and the position information transmitted from mobile object 1 (S306). It should be noted that the order of steps S305 and S306 is not limited to this order, and may be in the reverse order.

Next, in remote control system 2, predictive map information generator 23 generates or updates predictive map information by reflecting the prediction result obtained by communicator 21 in the map information (S307). In addition, security personnel information generator 24 generates or updates security personnel information based on the third information obtained by communicator 21 (S308). It should be noted that steps S307 and S308 do not have to be in this order, and may be in the reverse order.

Next, in remote control system 2, operator notification determiner 25 determines whether to notify operator 6 of the second information based on the prediction result or based on both the prediction result and the predictive map information when the predictive map information includes the history of areas where an emergency situation has been predicted to occur in the past (S309). Here, operator notification determiner 25 determines that notification is necessary and notifies operator 6 (S310). In addition, security personnel notification determiner 26 determines whether to notify security personnel 7 of the second information based on at least one of the prediction result, the predictive map information, or the security personnel information (third information) (S311). Here, security personnel notification determiner 26 determines that notification is necessary and notifies the security personnel 7 (S312).

Hereinafter, a specific example of the operation of information output system 100 according to the embodiment will be described with reference to FIG. 5. FIG. 5 is a schematic diagram illustrating an example of use of information output system 100 according to the embodiment. In the example illustrated in FIG. 5, information output system 100 in mobile object 1A predicts the occurrence of an emergency situation in which communication with remote control system 2 will be interrupted, and transmits the prediction result to remote control system 2. In addition, in the example illustrated in FIG. 5, information output system 100 in mobile object 1B predicts the occurrence of an emergency situation in which a traffic accident has occurred on the moving route and mobile object 1 will approach the site of the traffic accident, and transmits the prediction result to remote control system 2.

Information output system 100 in remote control system 2 determines whether to notify operator 6 and security personnel 7 of the second information based on the prediction result of mobile object 1A or based on both the prediction result and the predictive map information when the predictive map information includes the history of areas where an emergency situation has been predicted to occur in the past. If it is determined that the second information should be notified, information output system 100 notifies operator 6 and security personnel 7 of the second information. For example, upon receiving notification of the second information, operator 6 notifies security personnel 7A, who is on standby, to go to the position of mobile object 1A and deal with the emergency situation. In addition, for example, operator 6 notifies security personnel 7B, who is patrolling in a location relatively close to mobile object 1B, to go to the position of mobile object 1B and deal with the emergency situation.

Here, when information output system 100 cannot determine whether the second information should be notified, it may transmit predictive map information to operator 6. FIG. 6 is a schematic diagram illustrating an example of predictive map information. Map M1 illustrated in FIG. 6 is displayed on a display attached to operator terminal 4. Areas A1 and A2 are displayed on map M1. Area A1 indicates a point where mobile object 1A predicts that an emergency situation will occur (see the circle in area A1). Area A2 indicates a point where mobile object 1B predicts that an emergency situation will occur (see the circle in area A2). By looking at the predictive map information, operator 6 can determine whether security personnel 7 should be dispatched to each of areas A1 and A2.

As described above, the information output method and information output system 100 according to the embodiment outputs a prediction result when it predicts the occurrence of an emergency situation that will make the autonomous movement and remote operation of mobile object 1 difficult. For this reason, for example, in a remote control center, by referring to the prediction result, it is possible to notify operator 6 or security personnel 7 of the occurrence of an emergency situation before the emergency situation occurs. Therefore, measures can be taken to improve the emergency situation more quickly compared to when operator 6 or security personnel 7 is notified after the emergency situation occurs. That is, it is possible to quickly improve a situation that makes the autonomous movement of mobile object 1 and the remote operation of operator 6 difficult.

### [Other Embodiments]

While the information output method and information output system 100 according to one or more aspects of the present disclosure have been described above based on the embodiments, the present disclosure is not limited to these embodiments. Forms obtained by applying various modifications to each embodiment conceived by a person skilled in the art or forms constructed by combining the components in different embodiments without departing from the spirit of the present disclosure may be also included in one or more aspects of this disclosure.

For example, in the embodiment, after notifying operator 6, operator notification determiner 25 may determine whether it is possible to change the moving route to one that avoids the area predicted to occur in the emergency situation, for example by referring to predictive map information. If it is determined that the moving route can be changed to one that avoids the area described above, operator notification determiner 25 may transmit a change signal indicating a change of moving route to mobile object 1 via network N1. In this case, mobile object 1 that receives the change signal can avoid the emergency situation by changing its moving route. It should be noted that if it is determined that the moving route cannot be changed to one that avoids the area described above, operator notification determiner 25 may instruct mobile object 1 to change its moving route so that dispatched security personnel 7 can reach the location of mobile object 1 within an allowable time.

In addition, if it is determined that the moving route cannot be changed to one that avoids the area described above, operator notification determiner 25 may transmit a stop signal, which indicates to instruct mobile object 1 to stop at the nearest safe location such as a roadside, to mobile object 1 via network N1. In this case, mobile object 1 that receives the stop signal can easily avoid the emergency situation by stopping at the location described above.

In addition, if it is determined that the moving route cannot be changed to one that avoids the area described above, operator notification determiner 25 may transmit a speed change signal, which indicates to instruct mobile object 1 to decelerate or accelerate, to mobile object 1 via network N1. In this case, mobile object 1 that receives the speed change signal can easily avoid the emergency situation by decelerating or accelerating.

In addition, if it is determined that security personnel 7 cannot reach the location of mobile object 1 within the allowable time, operator notification determiner 25 may transmit a change signal, which indicates to instruct mobile object 1 to stop, decelerate, or accelerate, to mobile object 1 via network N1. In this case, mobile object 1 that has received the change signal indicating that it is to stop can stop and wait for security personnel 7 to reach the location of mobile object 1. In addition, mobile object 1 that has received the change signal indicating that it is to decelerate or accelerate can change its moving speed and makes it easier for security personnel 7 to reach the location of mobile object 1 within the allowable time.

FIG. 7 is a flowchart illustrating another operation example of information output system 100 according to the embodiment. The example illustrated in FIG. 7 differs from the operation example illustrated in FIG. 3 in that remote control system 2 further executes steps S211 and S212 between step S206 or S207 and step S208. As illustrated in FIG. 7, operator notification determiner 25, after determining whether to notify operator 6 of the second information, determines whether the moving route can be changed to avoid the area where the emergency situation is predicted to occur (S211). If it is determined that the moving route can be changed (S211: Yes), operator notification determiner 25 instructs mobile object 1 to change the moving route by transmitting a change signal to mobile object 1 (S212). On the other hand, if it is determined that the moving route cannot be changed (S211: No), operator notification determiner 25 does not execute anything in particular.

For example, the notification of the predictive map information to operator 6 may reflect the area where an emergency situation is predicted to occur and the area where the emergency situation actually occurred in different display modes. For example, the area where an emergency situation is predicted to occur and the area where the emergency situation actually occurred may be displayed in different colors on the display attached to operator terminal 4. In this mode, for example, when the number of requests for dispatch of security personnel 7 reaches or exceeds a predetermined number, operator 6 can easily visually grasp the area where an emergency situation is predicted to occur and the area where the emergency situation actually occurred, which has the advantage that it becomes easier to take measures such as partially canceling the dispatch of security personnel 7 to the area where an emergency situation is predicted to occur.

In addition, for example, the notification of the predictive map information to operator 6 may reflect the area where an emergency situation is predicted to occur and security personnel 7 dispatched to that area, including a display mode showing the relationship between them. For example, the area where an emergency situation is predicted to occur and a mark showing security personnel 7 dispatched to that area may be displayed in the same color on a display attached to operator terminal 4. This mode has the advantage that it becomes easier for operator 6 to visually grasp which security personnel 7 have been dispatched to the area where an emergency situation is predicted to occur.

In addition, for example, the notification of the predictive map information to operator 6 may reflect the area where the emergency situation is predicted to occur, including a display mode showing the cause of that emergency situation. For example, the display color on the display attached to operator terminal 4 may be different when the cause of the emergency situation is caused by the area, such as a deterioration in communication conditions, and when the cause of the emergency situation is caused by mobile object 1, such as the remaining battery power of mobile object 1 being depleted. This mode has the advantage that operator 6 can easily visually grasp the cause of the emergency situation, and therefore can easily take measures appropriate to the cause of the emergency situation. For example, when the cause of the emergency situation is a deterioration in communication conditions, operator 6 can determine that the need to dispatch security personnel 7 is relatively low, taking into consideration the possibility that the deterioration of the communication conditions is temporary. In addition, for example, when the cause of the emergency situation is the remaining battery power of mobile object 1 being depleted, the remaining battery power does not increase, and therefore operator 6 can determine that the need to dispatch security personnel 7 is relatively high.

In addition, for example, the notification of the predictive map information to operator 6 may reflect the area where an emergency situation is predicted to occur, including a display mode indicating whether the emergency situation has actually occurred. For example, when the prediction is switched to that an emergency situation will not occur in an area where an emergency situation is predicted to occur, a character string or image indicating that an emergency situation will not occur and the time may be displayed on a display attached to operator terminal 4. In addition, for example, when an emergency situation actually occurs in an area where an emergency situation is predicted to occur, a character string or image indicating that an emergency situation has occurred and the time of occurrence may be displayed on a display attached to operator terminal 4. In this aspect, since operator 6 can easily visually grasp whether an emergency situation has actually occurred in an area where an emergency situation is predicted to occur, there is an advantage that operator 6 can easily determine whether to dispatch security personnel 7. For example, if an emergency situation has actually occurred, operator 6 can determine to promptly dispatch security personnel 7. In addition, for example, if an emergency situation has not occurred, operator 6 can determine to notify security personnel 7 who have already been dispatched to stop dispatching.

In addition, for example, the notification of the predictive map information to operator 6 may reflect the area where an emergency situation is predicted to occur, including a display mode indicating the predicted time at which the emergency situation will occur. For example, a character string indicating the predicted time may be displayed, on a display attached to operator terminal 4, in the area where an emergency situation is predicted to occur. This aspect has the advantage that since operator 6 can easily visually grasp when an emergency situation is predicted to occur in the area where the emergency situation is predicted to occur, operator 6 can more easily dispatch security personnel 7 so that security personnel 7 can reach the area by the predicted time.

For example, in the embodiment, communicator (outputter) 13 outputs the prediction result of predictor 12 regardless of whether predictor 12 predicts that an emergency situation will occur, but the present disclosure is not limited thereto. For example, communicator 13 may output the prediction result of predictor 12 when predictor 12 predicts that an emergency situation will occur.

For example, in the embodiment, remote control system 2 includes both operator notification determiner 25 and security personnel notification determiner 26, but the present disclosure is not limited thereto. For example, remote control system 2 may include only one of operator notification determiner 25 and security personnel notification determiner 26.

For example, in the embodiment, obtainer 11, predictor 12, and communicator (outputter) 13 are mounted on mobile object 1, but the present disclosure is not limited thereto. For example, obtainer 11, predictor 12, and communicator 13 may be mounted on remote control system 2. That is, in the embodiment, information output system 100 is realized by mobile object 1 and remote control system 2 cooperating with each other, but it may be realized by only remote control system 2.

When information output system 100 is realized only by remote control system 2, predictor 12 can predict whether an emergency situation will occur, for example, by regarding a situation in which the load on remote control system 2 increases excessively as an emergency situation. That is, when the load on remote control system 2 increases excessively, just as in the case in which communication between remote control system 2 and mobile object 1 is interrupted, it becomes impossible to remotely monitor mobile object 1 via remote control system 2, and it becomes in a difficult state for operator 6 to remotely operate mobile object 1 via remote control system 2.

In this case, predictor 12 can predict whether the emergency situation described above will occur based on the amount of communication traffic in remote control system 2 or the amount of processing load in remote control system 2. For example, predictor 12 predicts that an emergency situation will occur when the delay in the display time of a graphical user interface (GUI) related to mobile object 1 in remote control system 2 exceeds an allowable time.

For example, the present disclosure can be realized as a program for causing a processor to execute the steps included in the information output method. Furthermore, the present disclosure can be realized as a non-transitory computer-readable recording medium such as a CD-ROM having a program thereon.

For example, when the present disclosure is realized as a program (software), each step is executed by running the program using hardware resources such as a CPU, a memory, input/output circuits of a computer. That is, each step is executed by the CPU obtaining data from the memory, the input/output circuits, or the like to perform calculations, and outputting the results of the calculations to the memory, the input/output circuits, or the like.

It should be noted that in the embodiment described above, each component included in information output system 100 may be realized by being configured with dedicated hardware, or by executing a software program suitable for each component. Each component may be realized by a program executor such as a CPU or processor reading out and executing a software program recorded on a recording medium such as a hard disk or a semiconductor memory.

Some or all of the functions of information output system 100 according to the above embodiment are typically realized as an LSI, which is an integrated circuit. These may be individually integrated into a single chip, or may be integrated into a single chip that includes some or all of the functions. In addition, the integrated circuit construction is not limited to an LSI, and may be realized using a dedicated circuit or a general-purpose processor. A field programmable gate array (FPGA) that can be programmed after the LSI is manufactured, or a reconfigurable processor that can reconfigure the connections and settings of circuit cells inside the LSI may also be used.

Furthermore, various variations in which modifications within the scope conceivable by those skilled in the art are made to each embodiment of the present disclosure without departing from the spirit of the present disclosure are also included in the present disclosure.

### [Industrial Applicability]

This disclosure is applicable to systems that manage mobile objects that move autonomously and through remote operation by an operator.

### [Reference Signs List]

1, 1A, 1B Mobile object
2 Remote control system
6 Operator
7, 7A, 7B Security personnel
100 Information output system
11 Obtainer
12 Predictor
13 Communicator (outputter)

## Claims

1. An information output method executed by a computer, the information output method comprising:
obtaining first information on at least one of a state of a mobile object or an environment surrounding the mobile object, the mobile object moving through at least one of autonomous movement or a remote operation by an operator;
predicting whether an emergency situation that makes the autonomous movement and the remote operation of the mobile object difficult will occur, based on the first information obtained;
and
outputting a prediction result of whether the emergency situation will occur.

2. The information output method according to claim 1,
wherein the first information includes information on a communication state of the mobile object, information on a state of a battery mounted on the mobile object, information on a state of a moving route along which the mobile object moves, or information on weather while the mobile object is moving.

3. The information output method according to claim 1 or 2,
wherein the emergency situation includes a situation in which communication between the mobile object and a remote control system that remotely monitors the mobile object is interrupted, a situation in which a remaining battery charge of a battery mounted on the mobile object falls below a predetermined value, or a situation in which the mobile object approaches a location where a natural disaster or a man-made disaster has occurred.

4. The information output method according to any one of claims 1 to 3,
wherein the predicting is further based on a load of work of the operator.

5. The information output method according to any one of claims 1 to 4, further comprising:
outputting second information to at least one of the operator or a security personnel who goes to a position of the mobile object and responds to the emergency situation, based on the prediction result of the emergency situation, the second information being on a dispatch of the security personnel.

6. The information output method according to claim 5,
wherein the second information includes information on a location to which the security personnel is to be dispatched, information on a content of the emergency situation, or information on work that should be performed by the security personnel.

7. The information output method according to claim 5 or 6,
wherein the outputting of the second information includes determining whether to output the second information to the operator based on the prediction result of the emergency situation and a history of the prediction result of the emergency situation in a past.

8. The information output method according to any one of claims 5 to 7,
wherein the outputting of the second information includes determining whether to output the second information to the security personnel based on the prediction result of the emergency situation and a load of work of the operator.

9. The information output method according to any one of claims 5 to 8, further comprising:
instructing the mobile object to change a moving route to avoid the emergency situation before dispatching the security personnel.

10. The information output method according to any one of claims 5 to 9, further comprising:
obtaining third information on a status of the security personnel; and
determining the security personnel to be dispatched based on the third information obtained.

11. The information output method according to claim 10,
wherein the third information includes information on a position of the security personnel, or information indicating whether the security personnel is performing work.

12. The information output method according to claim 10 or 11,
wherein the security personnel to be dispatched is determined based further on a distance between an area where the emergency situation is predicted to occur and the security personnel, and a time required for the security personnel to reach the area.

13. The information output method according to any one of claims 1 to 12, further comprising:
generating predictive map information that reflects the prediction result of the emergency situation in map information including a moving route of the mobile object; and
outputting the predictive map information generated to the operator.

14. A program for causing a computer to execute the information output method according to any one of claims 1 to 13.

15. An information output system comprising:
an obtainer that obtains first information on at least one of a state of a mobile object or an environment surrounding the mobile object, the mobile object moving through at least one of autonomous movement or a remote operation by an operator;
a predictor that predicts whether an emergency situation that makes the autonomous movement and the remote operation of the mobile object difficult will occur, based on the first information obtained by the obtainer; and
an outputter that outputs a prediction result of the predictor.
